# EUROPEAN PATENT APPLICATION

(11) **EP 4 129 615 A1**
(43) Date of publication of application: **08.02.2023**
(21) Application number: 21780465.7
(22) Date of filing: 29.03.2021
(51) Int. Cl.: B29C 45/00, B32B 5/18, C08J 5/04

(54) **THIN FILM-SHAPED FIBER-REINFORCED RESIN AND RESIN MOLDED BODY, AND METHOD FOR PRODUCING THE SAME**

(30) Priority: 31.03.2020 JP 2020063416
(71) Applicant: Mitsui Chemicals, Inc., Tokyo 105-7122 (JP)
(72) Inventor: HIRANO, Taiki, Sodegaura-shi Chiba 299-0265 (JP); ISAKI, Takeharu, Sodegaura-shi Chiba 299-0265 (JP); MIYATA, Atsushi, Sodegaura-shi Chiba 299-0265 (JP)
(74) Representative: Hoffmann Eitle
(86) International application number: PCT/JP2021/013219
(87) International publication number: WO 2021/200796

(57) **Abstract**

Provided is a thin film-shaped fiber-reinforced resin that can sufficiently increase the impact resistance of a coated resin molded body while suppressing the reduction in bending elastic modulus of the resin molded body. The thin film-shaped fiber-reinforced resin includes a plurality of reinforcing fibers that are arranged in a single direction alignment, and a matrix resin with which the reinforcing fibers are impregnated. The matrix resin includes a thermoplastic plastic and a thermoplastic elastomer. The content of the thermoplastic elastomer with respect to the total of the thermoplastic plastic mass and the thermoplastic elastomer mass is 5-40 mass%.

## Description

### Technical Field

The present invention relates to a thin film-shaped fiber-reinforced resin, as well as a resin molded body and a method for producing the same.

### Background Art

Thin film-shaped fiber-reinforced resins (hereinafter, also simply referred to as "Uni-Direction (UD) sheets") containing a plurality of reinforcing fibers that are arranged in a single direction alignment and a resin composition (matrix resin) with which the above reinforcing fibers are impregnated have been known. Since these UD sheets are lighter than metals while having high mechanical strength, they are being considered for applications such as reinforcing materials to cover the surface of resin molded bodies.

Patent Literature 1 describes a UD sheet that contains carbon fibers as the above reinforcing fibers and contains an acid-modified polypropylene and a non-acid-modified polypropylene as the above matrix resin. According to Patent Literature 1, the above acid-modified polypropylene increases the interfacial strength between the matrix resin and the carbon fibers, while the above non-acid-modified polypropylene guarantees high mechanical characteristics.

### Citation List

### Patent Literature

PTL 1
Japanese Patent Application Laid-Open No. 2018-154773

### Summary of Invention

### Technical Problem

As described in Patent Literature 1, a variety of materials for the matrix resin of UD sheets have been investigated.

As the matrix resin of UD sheets, relatively hard thermoplastic plastics have been used. In contrast, by incorporating a softer thermoplastic elastomer into the matrix resin, it is expected that the impact resistance of UD sheets and resin molded bodies covered with UD sheets can be improved.

However, according to the findings by the present inventors, the improvement in impact resistance due to the incorporation of the softer thermoplastic elastomer is in a trade-off relationship with a decrease in flexural modulus of elasticity due to the relative decrease in the amount of the harder thermoplastic plastic incorporated. Both impact resistance and flexural modulus of elasticity are characteristics that are often demanded at the time of application of UD sheets, but there has been no practical method found to enhance impact resistance while suppressing the decrease in flexural modulus of elasticity.

In view of the above problem, an object of the present invention is to provide a thin film-shaped fiber-reinforced resin that can sufficiently enhance impact resistance while suppressing the decrease in flexural modulus of elasticity of a resin molded body covered with a UD sheet, a resin molded body having such a thin film-shaped fiber-reinforced resin, and a method for producing such a resin molded body.

### Solution to Problem

A thin film-shaped fiber-reinforced resin according to one aspect of the present invention in order to solve the above problem contains a plurality of reinforcing fibers that are arranged in a single direction alignment and a matrix resin with which the reinforcing fibers are impregnated. The matrix resin contains a polypropylene-based resin and a styrene-based elastomer, and the content of the styrene-based elastomer with respect to the entire mass of the matrix resin is 10mass% or more and 40mass% or less.

A resin molded body according to another aspect of the present invention in order to solve the above problem contains the thin film-shaped fiber-reinforced resin and a molded body of a thermoplastic resin composition.

A method for producing a resin molded body according to another aspect of the present invention in order to solve the above problem includes disposing the thin film-shaped fiber-reinforced resin inside a metal mold and introducing a molten thermoplastic resin composition inside the metal mold in which the thin film-shaped fiber-reinforced resin has been disposed.

A method for producing a resin molded body according to another aspect of the present invention in order to solve the above problem includes providing a molded body of a thermoplastic resin composition and fusing the thin film-shaped fiber-reinforced resin to the surface of the molded body of the thermoplastic resin composition.

### Advantageous Effects of Invention

According to the present invention, a thin film-shaped fiber-reinforced resin that can sufficiently enhance impact resistance while suppressing the decrease in flexural modulus of elasticity of a resin molded body covered with a UD sheet, a resin molded body having such a thin film-shaped fiber-reinforced resin, and a method for producing such a resin molded body are provided.

### Description of Embodiments

In the numerical ranges described herein in stages, the upper limit value or lower limit value described in one numerical range may be replaced by the upper limit value or lower limit value of another numerical range in a different stage. Also, in the numerical ranges described herein, the upper limit value or lower limit value described in one numerical range may be replaced by the value shown in Examples.

In the present specification, the amount of each component in a composition means, when there are a plurality of substances corresponding to each component in the composition, the total amount of the plurality of substances present in the composition, unless otherwise noted.

In the present specification, a combination of two or more preferred aspects is a more preferred aspect.

### 1. Thin Film-Shaped Fiber-Reinforced Resin

One embodiment of the present invention relates to a thin film-shaped fiber-reinforced resin (UD sheet) containing a plurality of reinforcing fibers that are arranged in a single direction alignment and a resin composition (matrix resin) with which the above reinforcing fibers are impregnated. The matrix resin contains a polypropylene-based resin and a styrene-based elastomer, and the content of the styrene-based elastomer with respect to the entire mass of the matrix resin is 10mass% or more and 40mass% or less.

Although it is not certain why flexural modulus of elasticity and impact resistance can be enhanced when one embodiment of the present invention is the above-mentioned aspect, the present inventors presume as follows.

Polypropylene-based resins have a lower glass transition temperature (Tg) than polycarbonate resins, polyether ether ketone resins, and polyamide resins, which are commonly used in UD sheets, and are therefore susceptible to compressive deformation when subjected to impact. Also, styrene-based elastomers have a relatively low Tg among elastomers and are similarly susceptible to compressive deformation when subjected to impact. Since propylene and styrene-based elastomers have poor compatibility, the matrix resin probably has a sea-island structure, and the interface between the polypropylene-based resin and the styrene-based elastomer causes the cracks generated by the compressive deformation to spread in multiple directions. It is presumed that the above factors provide excellent impact characteristics.

Breakage in a flexural test for UD sheets is considered to be caused by buckling of the fibers on the compression side. Normally, it is thought that suppression of the above breakage (improvement in flexural modulus of elasticity) is attempted to be achieved by raising the Tg of the resin and improving the hardness of the resin. In the present invention, despite the use of resin and elastomer with relatively low Tg, unexpectedly, both high impact resistance and high flexural modulus of elasticity have been achieved. This is presumed to be because the amount of the styrene-based elastomer is sufficiently large to probably form an island phase with respect to the polypropylene-based resin, so that when stress is applied, these resin portions are slightly deformed, thereby suppressing stress concentration and avoiding buckling.

### 1-1. Reinforcing Fibers

The material of the above reinforcing fibers is not particularly limited. For example, carbon fiber, glass fiber, aramid fiber, alumina fiber, silicon carbide fiber, boron fiber, and metal fiber can be used as the above reinforcing fibers. Among these, carbon fiber is preferred from the viewpoint of excellent dynamic characteristics and ability to make the molded article lighter. Examples of the above carbon fiber include PAN-based carbon fiber, pitch-based carbon fiber, and rayon-based carbon fiber. Among these, PAN-based carbon filaments are preferred because of excellent balance between strength and elastic modulus.

In the above carbon fiber, the surface oxygen concentration ratio [O/C], which is the ratio of the number of atoms of oxygen (O) and carbon (C) on the surface of carbon fiber as measured by X-ray photoelectron spectroscopy, is preferably 0.05 or more and 0.5 or less, more preferably 0.08 or more and 0.4 or less, and still more preferably 0.1 or more and 0.3 or less. When the above surface oxygen concentration ratio is 0.05 or more, a sufficient amount of functional groups can be ensured on the surface of carbon fiber to further enhance adhesiveness with the matrix resin. When the above surface oxygen concentration ratio is 0.5 or less, the handleability and productivity of carbon fiber are excellent. The above surface oxygen concentration ratio [O/C] can be measured by the method described in WO2017/183672. The above surface oxygen concentration ratio [O/C] can be controlled by known methods including electrolytic oxidation treatment, chemical oxidation treatment, and vapor phase oxidation treatment, and control by electrolytic oxidation treatment is preferred.

The above reinforcing fibers have, from the viewpoint of sufficiently enhancing the strength-improving effect by the reinforcing fibers, an average diameter of preferably 1 µm or more and 20 µm or less, more preferably 3 µm or more and 15 µm or less, and still more preferably 4 µm or more and 10 µm or less.

The length of the above reinforcing fibers is normally 15 mm or more. The lower limit value for the length of the above reinforcing fibers is preferably 20 mm or more, more preferably 100 mm or more, and still more preferably 500 mm or more. The maximum value of the upper limit value for the length of the above reinforcing fibers is preferably the same as the maximum value for the length of the UD sheet, for example, 50 m. Normally, as a UD sheet used for the resin molded body, which will be mentioned later, a UD sheet cut to the desired length after production is used. Therefore, the length of the reinforcing fibers contained by the UD sheet that the resin molded body contains can be smaller than the above-mentioned minimum value for the length.

The above reinforcing fibers are preferably formed by opening a fiber bundle that has been bundled with a bundling agent (sizing agent). The number of single yarns in the above fiber bundle is not particularly restricted, but is normally 100 or more and 350,000 or less, preferably 1,000 or more and 250,000 or less, and more preferably 5,000 or more and 220,000 or less.

The above bundling agent may be any known bundling agent, including olefin-based emulsions, urethane-based emulsions, epoxy-based emulsions, and nylon-based emulsions. Among these, olefin-based emulsions are preferred, and an ethylene-based emulsion or propylene-based emulsion is more preferred. Examples of the ethylene-based polymer contained in the above ethylene-based emulsion include an ethylene homopolymer and a copolymer of ethylene and an α-olefin having 3 or more and 10 or less carbon atoms. Examples of the propylene-based polymer contained in the above propylene-based emulsion include a propylene homopolymer and a copolymer of propylene and ethylene or an α-olefin having 4 or more and 10 or less carbon atoms.

In particular, from the viewpoint of further enhancing adhesiveness between the reinforcing fiber bundle and the matrix resin, the above bundling agent preferably contains a non-modified polyolefin and a modified polyolefin. The above non-modified polyolefin is preferably a homopolypropylene, a homopolyethylene, an ethylene/propylene copolymer, a propylene/1-butene copolymer, or an ethylene/propylene/1-butene copolymer. The above modified polyolefin may be obtained by, for example, grafting a carboxylic acid group, carboxylic anhydride group, or carboxylic acid ester group into the polymer chain of a non-modified polyolefin and forming a salt between the above functional group and a metal cation. Among these, more preferred is a modified polyolefin including a metal carboxylate salt.

### 1-2. Matrix Resin

The matrix resin is a resin composition that contains a polypropylene-based resin and a styrene-based elastomer. The matrix resin may contain a resin component other than these, as well as a component other than the resin components, such as a filler.

From the viewpoint of further improving flexural modulus of elasticity and impact resistance, it is preferable that the matrix resin have a sea-island structure. Also, from the same viewpoint, it is more preferable for the matrix resin to have a sea-island structure, where the polypropylene-based resin is the sea and the styrene-based elastomer is the island. Whether or not the matrix resin has a sea-island structure can be confirmed by observing the cross section of the UD sheet with an electron microscope.

### 1-2-1. Polypropylene-Based Resin

The type of the polypropylene-based resin is not particularly restricted, and it may be a propylene homopolymer, may be a propylene-based copolymer, or may be a mixture thereof. The tacticity of the polypropylene-based resin is not particularly limited either, and it may be isotactic, may be syndiotactic, or may be atactic. It is preferable that the above tacticity be isotactic or syndiotactic. The polypropylene-based resin means a resin in which the content of structural units derived from propylene is 50mol% or more.

The polypropylene-based resin may be a non-modified polypropylene-based resin (P1), may be a modified polypropylene-based resin (P2) including a carboxylic acid salt or the like bonded to the polymer chain, or may be a mixture thereof, and it is preferred that the polypropylene-based resin be a mixture thereof. In the above mixture, the mass ratio of the non-modified polypropylene-based resin (P1) to the total mass of the non-modified polypropylene-based resin (P1) and the modified polypropylene-based resin (P2) [(P1)/(P1 + P2)] is preferably 80mass% or more and 99mass% or less, more preferably 85mass% or more and 98mass%, and still more preferably 90mass% or more and 97mass% or less.

For the above non-modified polypropylene-based resin (P1), the melt flow rate (MFR) as measured in accordance with ASTM D1238 at 230°C and under a load of 2.16 kg is preferably 100 g/10 min or more, and more preferably 130 g/10 min or more and 500 g/10 min or less. When the MFR is within this range, it is easier to sufficiently impregnate the reinforcing fibers with the matrix resin.

For the above non-modified polypropylene-based resin (P1), the weight average molecular weight (Mw) is preferably 50,000 or more and 300,000 or less, and more preferably 50,000 or more and 200,000 or less.

The above non-modified polypropylene-based resin (P1) is a resin component that is mainly composed of structural units derived from propylene, with the content of structural units derived from propylene being 50mol% or more. The above non-modified polypropylene-based resin (P1) may contain, in addition to the structural units derived from propylene, structural units derived from an α-olefin other than propylene, a conjugated diene or non-conjugated diene, or a polyene.

When the above non-modified polypropylene-based resin (P1) is a copolymer, examples of the α-olefin as the copolymerized component include α-olefins having 2 or more and 20 or less carbon atoms (including propylene), including ethylene, 1-butene, 3-methyl-1-butene, 4-methyl-1-pentene, 3-methyl-1-pentene, 4-methyl-1-hexene, 4,4-dimethyl-1-hexene, 1-nonene, 1-octene, 1-heptene, 1-hexene, 1-decene, 1-undecene, 1-dodecene, 1-tetradecene, 1-hexadecene, 1-octadecene, and 1-eicosene. Among these, 1-butene, ethylene, 4-methyl-1-pentene, and 1-hexene are preferred, and 1-butene and 4-methyl-1-pentene are more preferred. Examples of the conjugated diene and non-conjugated diene as the copolymerized component include butadiene, ethylidene norbornene, dicyclopentadiene, and 1,5-hexadiene. Two or more of these α-olefins, conjugated dienes, and non-conjugated dienes may be used in combination.

The above modified polypropylene-based resin (P2) is a polypropylene-based resin including a carboxylic acid salt or the like bonded to the polymer chain. In particular, when the modified polypropylene-based resin (P2) has a carboxylic acid salt, the interfacial adhesive strength between the reinforcing fibers and the matrix resin is likely to be increased.

For the above modified polypropylene-based resin (P2), preferably, the weight average molecular weight (Mw) is preferably 1,000 or more and 100,000 or less, and more preferably 2,000 or more and 80,000 or less.

The modified polypropylene-based resin (P2) can be synthesized by known methods such as a method in which a non-modified propylene-based polymer and a monomer having a carboxylic acid structure are subjected to radical graft polymerization.

The above non-modified propylene-based polymer may be any propylene-based polymer similar to the above-mentioned non-modified polypropylene-based resin (P1), and it is preferable that the non-modified propylene-based polymer be a propylene homopolymer, and a copolymer of propylene and an α-olefin, such as ethylene/propylene copolymer, propylene/1-butene copolymer, and ethylene/propylene/1-butene copolymer.

The above monomer having a carboxylic acid structure may be a monomer having a carboxylic acid group or may be a monomer having a carboxylic acid ester. The above carboxylic acid group may be neutralized, and the above carboxylic acid ester may be saponified. Specific examples thereof include an ethylene-based unsaturated carboxylic acid, an anhydride thereof, or an ester thereof, and a compound having an unsaturated vinyl group other than olefins.

Examples of the above ethylene-based unsaturated carboxylic acid include (meth)acrylic acid, maleic acid, fumaric acid, tetrahydrophthalic acid, itaconic acid, citraconic acid, crotonic acid, and isocrotonic acid. Examples of the above anhydride include nadic acid (endo-cis-bicyclo[2.2.1]hept-5-ene-2,3-dicarboxylic acid), maleic anhydride, and citraconic anhydride.

Examples of the above compound having an unsaturated vinyl group other than olefins include: (meth)acrylic acid esters including methyl (meth)acrylate, ethyl (meth)acrylate, propyl (meth)acrylate, n-butyl (meth)acrylate, i-butyl (meth)acrylate, tert-butyl (meth)acrylate, n-amyl (meth)acrylate, isoamyl (meth)acrylate, n-hexyl (meth)acrylate, 2-ethylhexyl (meth)acrylate, octyl (meth)acrylate, decyl (meth)acrylate, dodecyl (meth)acrylate, octadecyl (meth)acrylate, stearyl (meth)acrylate, tridecyl (meth)acrylate, lauroyl (meth)acrylate, cyclohexyl (meth)acrylate, benzyl (meth)acrylate, phenyl (meth)acrylate, isobornyl (meth)acrylate, dicyclopentanyl (meth)acrylate, dicyclopentenyl (meth)acrylate, dimethylaminoethyl (meth)acrylate, and diethylaminoethyl (meth)acrylate; hydroxy group-containing vinyls including hydroxyethyl acrylate, 2-hydroxyethyl (meth)acrylate, 2-hydroxypropyl (meth)acrylate, 4-hydroxybutyl acrylate, lactone-modified hydroxyethyl (meth)acrylate, and 2-hydroxy-3-phenoxypropyl acrylate; epoxy group-containing vinyls including glycidyl (meth)acrylate and methylglycidyl (meth)acrylate; isocyanate group-containing vinyls including vinyl isocyanate and isopropenyl isocyanate; aromatic vinyls including styrene, α-methylstyrene, vinyltoluene, and t-butylstyrene; amides including acrylamide, methacrylamide, N-methylolmethacrylamide, N-methylolacrylamide, diacetone acrylamide, and maleic acid amide; vinyl esters including vinyl acetate and vinyl propionate; aminoalkyl (meth)acrylates including N,N-dimethylaminoethyl (meth)acrylate, N,N-diethylaminoethyl (meth)acrylate, N,N-dimethylaminopropyl (meth)acrylate, N,N-dipropylaminoethyl (meth)acrylate, N,N-dibutylaminoethyl (meth)acrylate, and N,N-dihydroxyethylaminoethyl (meth)acrylate; unsaturated sulfonic acids including styrenesulfonic acid, sodium styrenesulfonate, and 2-acrylamido-2-methylpropanesulfonic acid; and unsaturated phosphoric acids including mono(2-methacryloyloxyethyl) acid phosphate and mono(2-acryloyloxyethyl) acid phosphate. Two or more of these may be used.

Among these, ethylene-based unsaturated carboxylic anhydrides are preferred, and maleic anhydride is more preferred.

The modified polypropylene-based resin (P2) can be synthesized by known methods. For example, the above non-modified propylene-based polymer and the above monomer having a carboxylic acid structure may be allowed to react with each other in an organic solvent in the presence of a polymerization initiator, followed by desolvation; a molten product obtained by heating and melting the above non-modified propylene-based polymer and the above carboxylic acid having an unsaturated vinyl group may be allowed to react with each other by stirring in the presence of a polymerization initiator; or a mixture of the above non-modified propylene-based polymer, the above carboxylic acid having an unsaturated vinyl group, and a polymerization initiator may be fed to an extruder and allowed to react by heating and kneading, and then made into a carboxylic acid salt by a method such as neutralization or saponification.

Examples of the above polymerization initiator include a variety of peroxide compounds including benzoyl peroxide, dichlorobenzoyl peroxide, dicumyl peroxide, di-tert-butyl peroxide, 2,5-dimethyl-2,5-di(peroxybenzoate)hexyne-3, and 1,4-bis(tert-butylperoxyisopropyl)benzene, as well as azo compounds including azobisisobutyronitrile. Note that two or more of these polymerization initiators may be used in combination.

Examples of the above organic solvent include: aromatic hydrocarbons including xylene, toluene, and ethylbenzene; aliphatic hydrocarbons including hexane, heptane, octane, decane, isooctane, and isodecane; alicyclic hydrocarbons including cyclohexane, cyclohexene, methylcyclohexane, and ethylcyclohexane; ester-based solvents including ethyl acetate, n-butyl acetate, cellosolve acetate, propylene glycol monomethyl ether acetate, propylene glycol monoethyl ether acetate, and 3-methoxybutyl acetate; and ketone-based solvents including methyl ethyl ketone and methyl isobutyl ketone. Among these, aromatic hydrocarbons, aliphatic hydrocarbons, and alicyclic hydrocarbons are preferred as the above organic solvent, and aliphatic hydrocarbons and alicyclic hydrocarbons are more preferred. Note that two or more of these organic solvents may be mixed for use.

At this time, from the viewpoint of treating the raw materials of the modified polypropylene-based resin (P2) as a water dispersion, it is preferable that the above monomer having a carboxylic acid structure be neutralized or saponified.

The above neutralization or saponification may be carried out by known methods using basic substances such as alkali metals or alkaline earth metals including sodium, potassium, lithium, calcium, magnesium, and zinc; other metals; inorganic amines including hydroxylamine and ammonium hydroxide; organic amines including ammonia, (tri)methylamine, (tri)ethanolamine, (tri)ethylamine, dimethylethanolamine, and morpholine; oxides, hydroxides, or hydrides of alkali metals or alkaline earth metals such as zinc including sodium oxide and sodium peroxide; oxides, hydroxides, or hydrides of other metals; weak acid salts of alkali metals or alkaline earth metals including sodium carbonate; and weak acid salts of other metals.

The degree of neutralization or degree of saponification by the above neutralization or saponification is preferably 50% or more and 100% or less, more preferably 70% or more and 100% or less, and still more preferably 85% or more and 100% or less, from the viewpoint of enhancing both the stability of the water dispersion and the adhesiveness with the reinforcing fibers. In the modified polypropylene-based resin (P2), it is preferable that all of the carboxylic acid groups be neutralized or saponified, but some of the carboxylic acid groups may remain unneutralized or unsaponified.

Note that the salt component of the carboxylic acid group can be detected and its amount can be measured by methods such as a method in which the metal species forming the salt is detected by ICP emission analysis and a method in which the structure of the salt of the acid group is identified by using IR, NMR, mass spectrometry, or elemental analysis.

The content ratio of the polypropylene-based resin in the matrix resin is preferably 60mass% or more and 90mass% or less, and more preferably 70mass% or more and 85mass% or less with respect to the entire mass of the matrix resin, from the viewpoint of further improving flexural modulus of elasticity and impact resistance.

### 1-2-2. Styrene-Based Elastomer

The above styrene-based elastomer is at least one copolymer selected from the group consisting of block copolymers containing at least one polymer block derived from styrene and at least one polymer block derived from a conjugated diene compound and hydrogenated products thereof.

Examples of the above styrene-based elastomer include block copolymers containing at least one polymer block derived from styrene and at least one polymer block derived from a conjugated diene compound such as butadiene and isoprene, including a polystyrene - polybutadiene - polystyrene block copolymer (SBS) and a polystyrene - polyisoprene - polystyrene block copolymer (SIS), and hydrogenated products of the above block copolymers including a polystyrene - polyethylene/butylene - polystyrene block copolymer (SEBS) and a polystyrene - polyethylene/propylene - polystyrene block copolymer (SEPS).

The content of the above styrene-based elastomer is an amount of 10mass% or more and 40mass% or less with respect to the total mass of the above matrix resin.

In general, thermoplastic plastics such as polypropylene-based resins are excellent in flexural elasticity, and thermoplastic elastomers are excellent in impact resistance. Therefore, it is thought that the use of a thermoplastic elastomer in the matrix resin can enhance the impact resistance of UD sheets and resin molded bodies covered with UD sheets, but on the other hand, the flexural modulus of elasticity would be decreased due to the relative decrease in the amount of the thermoplastic plastic incorporated.

In contrast, according to the new findings by the present inventors, among the combinations of thermoplastic plastics and thermoplastic elastomers, the combination of a polypropylene-based resin and a styrene-based elastomer, where the amount of the styrene-based elastomer incorporated with respect to the polypropylene-based resin is within the above predetermined range, demonstrates the impact resistance-improving effect due to the incorporation of the styrene-based elastomer, yet the flexural elasticity of the UD sheet is hardly decreased, and the flexural elasticity of the resin molded body covered with the UD sheet becomes rather higher.

From the viewpoint of achieving the impact resistance-improving effect more remarkably while maintaining the flexural elasticity due to the incorporation of the above styrene-based elastomer, as well as suppressing a decrease in the flowability of the matrix resin due to the styrene-based elastomer and maintaining the impregnation property of the matrix resin into the reinforcing fibers, the content of the above styrene-based elastomer is preferably 10mass% or more and 35mass% or less, and more preferably 15mass% or more and 30mass% or less, with respect to the entire mass of the above matrix resin.

### 1-2-3. Other Thermoplastic Resin

The matrix resin may contain a thermoplastic resin other than the polypropylene-based resin as long as the effects of the present invention are achieved. Examples of the thermoplastic resin other than the polypropylene-based resin include a polycarbonate resin, a styrene-based resin, a polyamide resin, a polyester resin, a polyphenylene sulfide resin (PPS resin), a modified polyphenylene ether resin (modified PPE resin), a polyacetal resin (POM resin), a liquid crystal polyester, a polyarylate resin, an acrylic resin including polymethyl methacrylate resin (PMMA), a vinyl chloride resin, a polyimide (PI) resin, a polyamide-imide (PAI) resin, a polyetherimide (PEI) resin, a polysulfone resin, a polyethersulfone resin, a polyketone resin, a polyether ketone resin, a polyether ether ketone (PEEK) resin, a polyolefin resin (excluding the polypropylene-based resin) including polyethylene resin, polybutene resin, and poly4-methyl-1-pentene resin, a modified polyolefin resin (excluding the modified polypropylene-based resin), which is a modified product of the above, and a phenoxy resin. The above polyolefin resin may be a copolymer including an ethylene/propylene copolymer (copolymer in which the content of structural units derived from propylene is less than 50mol%), an ethylene/1-butene copolymer, an ethylene/propylene/diene copolymer (copolymer in which the content of structural units derived from propylene is less than 50 mol%), an ethylene/carbon monoxide/diene copolymer, an ethylene/ethyl (meth)acrylate copolymer, an ethylene/glycidyl (meth)acrylate, and an ethylene/vinyl acetate/glycidyl (meth)acrylate copolymer.

The content ratio of the other thermoplastic resin is not particularly restricted as long as the effects of the present invention are achieved, and it is preferably 10mass% or less, more preferably 5mass% or less, and still more preferably 1mass% or less, with respect to the entire resin components of the matrix resin, and it is particularly preferable that the matrix resin be substantially free of the other thermoplastic resin.

In the matrix resin, from the viewpoint of further improving impact characteristics, especially impact characteristics at a low temperature, the content ratio of a thermoplastic resin having a glass transition temperature (Tg) of 100°C or higher is preferably 5mass% or less, and more preferably 1mass% or less, with respect to the entire mass of the matrix resin, and it is still more preferable that the matrix resin be substantially free of such a thermoplastic resin. The Tg of thermoplastic resins can be determined by differential scanning calorimetry (DSC). In general, polycarbonates have a Tg of 150°C, polyphenylene sulfide resins have a Tg of 126°C, polyethersulfone resins have a Tg of 230°C, polyamide-imide resins have a Tg of 275°C, and styrene-based resins have a Tg of 100°C.

In the matrix resin, from the viewpoint of forming the sea-island structure more appropriately to further improve impact characteristics, especially impact characteristics at a low temperature, the content ratio of a thermoplastic resin having a glass transition temperature (Tg) of 30°C or higher is preferably 3mass% or less, and more preferably 1mass% or less, with respect to the entire mass of the matrix resin, and it is still more preferable that the matrix resin be substantially free of such a thermoplastic resin. In general, vinyl chloride resins have a Tg of 87°C, and terpene-based resins have a Tg of 30 to 100°C.

In the matrix resin, from the viewpoint of forming the sea-island structure more appropriately to further improve impact characteristics, especially impact characteristics at a low temperature, the content ratio of an additive that has a property of compatibilizing the above-mentioned polypropylene-based resin and the above-mentioned styrene-based elastomer is preferably 3 parts by mass or less, and more preferably 1 part by mass or less, with respect to 100 parts by mass of the entire resin components of the matrix resin, and it is still more preferable that the matrix resin be substantially free of such an additive. Examples of the additive for compatibilization may include a resin having a SP value between the SP value of the above-mentioned polypropylene-based resin and the value of the above-mentioned styrene-based elastomer. The SP value can be calculated using the Fedors method.

### 1-2-4. Other Thermoplastic Elastomer

The matrix resin may contain a thermoplastic elastomer other than the styrene-based elastomer as long as the effects of the present invention are achieved. Examples of the thermoplastic elastomer other than the styrene-based elastomer include a polyester-based elastomer, a polyamide-based elastomer, a thermoplastic polyurethane-based elastomer (TPU), an olefin-based elastomer, a polyvinyl chloride-based elastomer, and a fluorine-based elastomer.

In the matrix resin, the content ratio of the other thermoplastic elastomer is preferably 10mass% or less, more preferably 5mass% or less, and still more preferably 1mass% or less, with respect to the entire mass of the matrix resin, and it is particularly preferable that the matrix resin be substantially free of the other thermoplastic elastomer.

The aspect of the matrix resin is as mentioned above, but it is preferable for the matrix resin to contain substantially only the above-mentioned polypropylene-based resin and the above-mentioned styrene-based elastomer. By this aspect, there is a tendency that the flexural modulus of elasticity and impact resistance can be further improved.

### 1-2-5. Other Components

The matrix resin may contain other components such as a resin other than the above or short fibers with a length shorter than that of the above reinforcing fibers.

### 1-3. UD Sheet

The UD sheet can be fabricated by impregnating the above reinforcing fibers with the above matrix resin by known methods.

For example, by bringing a plurality of the above reinforcing fibers, which have been opened and arranged in a single direction, into simultaneous contact with an impregnation roll having a surface coated with the above matrix resin in a molten state, and by rotating the above impregnation roll and moving the above plurality of reinforcing fibers along the above rotation direction, the above reinforcing fibers can be impregnated with the above matrix resin.

Alternatively, the method for resin impregnation is not limited to the above method, and it may be done by a method in which the above reinforcing fibers are immersed in a bath of the above matrix resin that has been molten.

After impregnating the carbon fibers with the resin, the resin is cooled and solidified, thereby obtaining a UD sheet in which the plurality of reinforcing fibers that are arranged in a single direction alignment are impregnated with the above matrix resin.

The content of the above reinforcing fibers with respect to the entire mass of the UD sheet is preferably 20mass% or more and 80mass% or less, more preferably 30mass% or more and 75mass% or less, still more preferably 30mass% or more and 65mass% or less, and particularly preferably 35mass% or more and 60mass% or less. Also, the content of the above matrix resin with respect to the entire mass of the UD sheet is preferably 20mass% or more and 80mass% or less, more preferably 25mass% or more and 70mass% or less, still more preferably 35mass% or more and 70mass% or less, and particularly preferably 40mass% or more and 65mass% or less.

The content of the above reinforcing fibers (fiber volume content ratio: Vf) with respect to the entire volume of the UD sheet is preferably 10vol% or more and 70vol% or less, more preferably 15vol% or more and 60vol% or less, and still more preferably 20vol% or more and 60vol% or less.

The thickness of the UD sheet is not particularly limited, but it is preferably 1 µm or more and 500 µm or less, more preferably 5 µm or more and 400 µm or less, and still more preferably 5 µm or more and 300 µm or less.

The aspect of the UD sheet when in use is not limited as well, and a single UD sheet may be used as it is, or a plurality of UD sheets may be used as a layered body. The UD sheet may also be cut as appropriate and used in the form of tape.

The aspect of the UD sheet is as mentioned above, but it is preferable for the UD sheet to contain substantially only the above-mentioned reinforcing fibers, the above-mentioned polypropylene-based resin, and the above-mentioned styrene-based elastomer. By this aspect, there is a tendency that the flexural modulus of elasticity and impact resistance can be further improved. Note that, the expression "contain substantially only these" as used herein means that components other than these are permitted to be contained in amounts that do not provide any effects, and the expression "substantially free of a certain component" means that such a component is permitted to be contained in an amount that does not provide any effects. In this aspect, the preferred content of each component is as mentioned above.

### 2. Resin Molded Body

Another embodiment of the present invention relates to a resin molded body having the above-mentioned UD sheet and a molded body of a thermoplastic resin composition (hereinafter, also simply referred to as a "base material molded body").

### 2-1. Base Material Molded Body

The base material molded body is a molded body formed by molding a thermoplastic resin composition containing one type of or multiple types of thermoplastic resins (hereinafter, also simply referred to as a "base material resin") and an additive optionally incorporated.

Examples of the above base material resin include a polyolefin resin, a polyamide resin, a polyester resin, a polystyrene resin, a thermoplastic polyimide resin, a polyamide-imide resin, a polycarbonate resin, a polyphenylene ether resin, a polyphenylene sulfide resin, a polyacetal resin, an acrylic resin, a polyetherimide resin, a polysulfone resin, a polyether ketone resin, a polyether ether ketone resin, a polyarylate resin, a polyether nitrile resin, a polyvinyl chloride resin, an ABS resin, and a fluororesin.

Among these, it is preferable that the above base material resin contain an olefin-based resin including an ethylene-based polymer, a propylene-based polymer, and another α-olefin-based polymer, it is more preferable that it contain a propylene-based polymer, and it is still more preferable that it contain both a propylene-based polymer and the above other α-olefin-based polymer.

Examples of the above ethylene-based polymer include an ethylene homopolymer and a copolymer of ethylene and an α-olefin having 3 or more and 20 or less carbon atoms. Note that only one of these ethylene-based polymers may be used, or multiple types thereof may be used in combination.

Examples of the above propylene-based polymer include a propylene homopolymer and a copolymer of propylene and ethylene or an α-olefin having 4 or more and 20 or less carbon atoms. Note that only one of these propylene-based polymers may be used, or multiple types thereof may be used in combination.

Examples of the above α-olefin-based polymer include a homopolymer of an α-olefin having 4 or more and 20 or less carbon atoms, and a copolymer of α-olefins having 2 or more and 20 or less carbon atoms (excluding the above ethylene-based polymer and propylene-based polymer).

Note that examples of the above α-olefin include ethylene, propylene, 1-butene, 3-methyl-1-butene, 4-methyl-1-pentene, 3-methyl-1-pentene, 4-methyl-1-hexene, 4,4-dimethyl-1-hexene, 1-nonene, 1-octene, 1-heptene, 1-hexene, 1-decene, 1-undecene, 1-dodecene, 1-tetradecene, 1-hexadecene, 1-octadecene, and 1-eicosene. Among these, it is preferable that the above α-olefin-based polymer be a copolymer containing 1-butene, ethylene, 4-methyl-1-pentene, and 1-hexene, and it is more preferable that the above α-olefin-based polymer be a copolymer containing 1-butene and 4-methyl-1-pentene. The above α-olefin-based polymer may be a random copolymer or a block copolymer, but it is preferably a random copolymer.

From the viewpoint of further increasing the joining strength between the base material molded body and the UD sheet, it is preferable that the above base material resin be a polyolefin, and it is more preferable that the above base material resin be a polypropylene-based resin.

From the viewpoint of further increasing the joining strength between the base material molded body and the UD sheet, it is preferable that the above base material resin be compatible with the thermoplastic plastic contained in the matrix resin of the UD sheet. Note that "compatible" means that, when a mixture of both resins is heated and mixed at or above their melting points and cooled to 25°C, a single phase is formed.

Examples of the above additive include a known filler (inorganic filler, organic filler), a pigment, a dye, a weather resistance stabilizer, a heat resistance stabilizer, an antistatic agent, an antislip agent, an antioxidant, an antimold agent, an antimicrobial agent, an antibacterial agent, a flame retardant, and a softener.

Examples of the filler as the above additive include a powder filler including mica, carbon black, carbon nanotube, graphite, sepiolite, silica, wollastonite, calcium carbonate, basic magnesium sulfate, montmorillonite, talc, stainless steel, and aluminum, as well as a fibrous filler including carbon fiber, glass fiber, basalt fiber, metal fiber, metal oxide fiber, MOS-HIGE (basic magnesium sulfate inorganic fiber), and calcium carbonate whisker. These fillers can increase the strength of the resin molded body.

Among these, talc, calcium carbonate, carbon fiber, glass fiber, whisker, and basic magnesium sulfate are preferred, and carbon fiber, glass fiber, whisker, and basic magnesium sulfate are more preferred.

Note that the above fibrous filler is normally long fiber or short fiber. The length of the fibrous filler, which is long fiber or short fiber, is preferably 0.05 mm or more and 15 mm or less, more preferably 0.1 mm or more and 15 mm or less, and still more preferably 0.2 mm or more and 15 mm or less.

The aspect ratio of the above fibrous filler that is short fiber is usually less than 500. The aspect ratio of the above reinforcing fibers is preferably 1 or more and 2,000 or less, more preferably 1 or more and 1,500 or less, and still more preferably 5 or more and 1,500 or less.

From the viewpoint of sufficiently increasing the strength of the base material molded body and suppressing a decrease in the flowability due to the additive to suppress a decrease in the ease of molding, the content of the above filler is preferably 3mass% or more and 70mass% or less, more preferably 5mass% or more and 60mass% or less, and still more preferably 10mass% or more and 50mass% or less, with respect to the entire mass of the base material molded body.

Examples of the pigment and dye as the above additive include known coloring matter. In particular, when fusing the UD sheet to the base material molded body by irradiation with laser beams, the above pigment and dye can increase the absorption efficiency of the laser beams by the base material molded body and further increase the fusion efficiency to the base material molded body. At this time, it is preferable that the above pigment and dye be a pigment and a dye having a larger absorbance at the same wavelength as the wavelength of the above laser beams with which the irradiation is performed. Specifically, the above pigment and dye are preferably a pigment and a dye having an absorption maximum wavelength of 300 nm or more and 3,000 nm or less, more preferably a pigment and a dye having an absorption maximum wavelength of 500 nm or more and 2,000 nm or less, and still more preferably a pigment and a dye having an absorption maximum wavelength of 700 nm or more and 1,500 nm or less. On the contrary, from the viewpoint of more freely selecting the wavelength of the laser beams, it is preferable that the above pigment and dye be a pigment and a dye (or a combination thereof) that can absorb a wider range of wavelengths. Specifically, the above pigment and dye are preferably a black color-based pigment and dye (or a combination thereof), more preferably include a carbon-based pigment, and still more preferably include carbon black.

The content of the pigment and dye as the above additive may be any degree as long as the absorption of the laser beams by the base material molded body is sufficiently increased and other characteristics such as the strength of the base material molded body and the resin molded body are not remarkably affected. For example, the content of carbon black as the above additive is preferably 0.1mass% or more and 10mass% or less, and more preferably 0.5mass% or more and 5mass% or less, with respect to the entire mass of the thermoplastic resin composition.

### 2-2. Resin Molded Body

The above resin molded body has the above-mentioned UD sheet and base material molded body.

The above UD sheet preferably covers at least part of the surface of the base material molded body, and is more preferably fused to the above surface. In the present embodiment, the above UD sheet typically acts as a reinforcing material that improves the physical properties of the base material molded body.

At this time, the above UD sheet may be fused only to part of the surface of the base material molded body (for example, a portion where a certain mechanical strength is demanded when in use), or it may be fused to the entire surface of the base material molded body. Also, only one UD sheet may be fused to the surface (in part or in entirety) of the base material molded body, or a plurality of UD sheets may be fused thereto. When a plurality of UD sheets are fused, these UD sheets may be arranged (layered) so that the orientation of the reinforcing fibers is identical, or they may be layered so that the orientation of the reinforcing fibers varies between the layers. When the base material molded body has a three-dimensional shape, the above UD sheet may be fused to part or all of the main surface of the base material molded body, may be fused to part or all of the back surface, may be fused to part or all of another surface, or may be a combination of these. The term "surface" of the base material molded body refers to all exposed portions, the term "main surface" refers to the surface with the largest area, and the term "back surface" refers to a surface that is not in contact with the main surface, for example, a surface arranged on the back side with respect to the main surface of the base material molded body in such a way that it is approximately parallel to the main surface. The main surface and the back surface may have the same area.

For example, the above resin molded body can be a resin molded body containing a sheet-shaped base material molded body and a UD sheet fused to one surface or both surfaces of the above sheet-shaped base material molded body. From the viewpoint of suppressing the occurrence of warpage in the resin molded body and more fully achieving the improving effect of mechanical physical properties by the UD sheet, it is preferable that the above resin molded body be a layered body in which the UD sheet is fused to both surfaces of a sheet-shaped base material molded body, and the UD sheet, the base material molded body, and the UD sheet are layered in the order presented.

At this time, in the above sheet-shaped base material molded body, the thickness is preferably 0.5 mm or more and 50 mm or less, more preferably 1.0 mm or more and 25 mm or less, and still more preferably 2.0 mm or more and 20 mm or less.

In the above resin molded body, improvement in impact resistance can be seen due to the above UD sheet in which the matrix resin contains the above polypropylene-based resin and the above styrene-based elastomer. The above improvement in impact resistance is remarkable, especially in a low-temperature environment such as below the freezing point. Meanwhile, since the above resin molded body uses the above-mentioned UD sheet, the decrease in flexural modulus of elasticity due to the addition of the above styrene-based elastomer to the UD sheet is not observed, and rather, the flexural modulus of elasticity may even be improved.

### 2-3. Method for Producing Resin Molded Body

The above resin molded body can be fabricated by known methods for covering the base material molded body with the UD sheet (fusing the UD sheet to the base material molded body).

For example, when producing by insert molding, the UD sheet may be disposed inside a metal mold, then the metal mold may be closed, and the above thermoplastic resin composition in a molten state may be introduced into the inside of the metal mold by injection or other methods. After that, the metal mold may be cooled and the above resin molded body may be taken out. The temperature at which the thermoplastic resin is molten is not particularly restricted as long as it is at or above the melting point of the thermoplastic resin, and in the case of an olefin-based resin, for example, the melting may be carried out at or above the melting point and 400°C or lower. The temperature of the metal mold when the molten thermoplastic resin is introduced into the metal mold is not particularly restricted. It can be set as appropriate depending on the shape of the metal mold and the flowability of the thermoplastic resin. The cooling of the metal mold can be carried out by, for example, leaving it at room temperature.

Alternatively, when producing by press molding, the UD sheet may be disposed on the surface of the base material molded body and the base material molded body and the UD sheet may be fused together by pressing while heating. After that, the metal mold may be cooled and the above resin molded body may be taken out.

Alternatively, the base material molded body and the UD sheet may be fused together by irradiating their contact portions with laser beams while feeding a tape-shaped UD sheet to the surface of the base material molded body.

### 2-4. Applications

The applications of the above resin molded body are not limited, but it is useful as a reinforcing material for other structural materials, and is especially useful as a reinforcing material for members constituting vehicles and aircraft where instantaneous impacts occur.

Specific examples of the applications of the above resin molded body include: components and members for general flying objects such as aircraft and helicopters, including primary structural materials including main wings, and vertical and horizontal tails, secondary structural materials including ailerons, rudders, and elevators, interior materials including seats and tables, power apparatuses, hydraulic cylinders, and composite brakes; rocket components and members including nozzle cones and motor cases; artificial satellite components and members including antennas, structures, solar cell panels, battery cases, and telescopes; machine components and members including frames, shafts, rollers, plate springs, machine tool heads, robot arms, conveying hands, and synthetic fiber pots; high-speed rotor components and members including centrifuge rotors and uranium enrichment cylinders; electronic and electrical components and members including parabolic antennas, battery members, radars, acoustic speaker cones, computer components, printer components, personal computer housings, and tablet housings; automotive and motorcycle components and members including framework components, semi-structural components, outer panel components, interior and exterior components, power apparatuses, and other equipment - hydraulic cylinders, brakes, battery cases, drive shafts, engine parts, spoilers, racing car bodies, crash cones, chairs, tablets, phone covers, under covers, side covers, transmission covers, battery trays, rear steps, spare tire containers, bus body walls, and truck body walls; vehicle components and members including interior materials, floor board panels, ceiling panels, linear motor car bodies, Shinkansen and railroad vehicle bodies, window wipers, bogies, and seats; watercraft components, members, and bodies including watercraft hulls such as yachts, cruisers, and boats, masts, rudders, propellers, hard sails, screws, military ship hulls, submarine hulls, and deep ocean survey vehicles; pressure vessel components and members including actuators, cylinders, bombs, hydrogen tanks, CNG tanks, and oxygen tanks; scientific apparatus components and members including stirring blades, pipes, tanks, pit floors, and plant piping; wind power generation components and members including blades, skins, framework structures, and deicing systems; medical and nursing care equipment components, members, and goods including X-ray diagnostic apparatus components, wheelchairs, artificial bones, artificial legs and hands, crutches, nursing care assistive devices and robots (power assist suits), walking machines, and nursing care beds; civil engineering, construction, and infrastructure components and members including CF composite cables, concrete reinforcing members, guard rails, bridges, tunnel walls, hoods, cables, tension rods, strand rods, and flexible pipes; components and members for drilling offshore oil fields, including marine risers, flexible jumpers, flexible risers, and drilling risers; sports and leisure goods including fishing rods, reels, golf clubs, tennis rackets, badminton rackets, ski boards, ski poles, snowboards, ice hockey sticks, snowmobiles, archery equipment, bamboo swords for kendo, baseball bats, swimming diving boards, sports goods for the disabled, and sports helmets; bicycle components including frames, disc wheels, rims, handlebars and saddles; household goods including glasses, bags, Western-style umbrellas, and ballpoint pens; and components, members, and goods for other industrial applications, including plastic pallets, containers, logistics materials, resin molds, furniture, Western-style umbrellas, helmets, pipes, scaffold boards, safety shoes, protectors, fuel cell covers, drone blades, frames, jigs, and jig frames.

### Examples

Hereinafter, the present invention will be described further specifically with reference to Examples, but the scope of the present invention is not limited to the description of Examples.

### 1. Methods for Measuring Various Physical Properties

### 1-1. Flexural Modulus of Elasticity

The flexural modulus of elasticity was measured in accordance with the method specified in JIS K7171 (2016) under the conditions with a test speed of 1 mm/min, a support span of 48 mm, and test temperatures of 23, 50, and 80°C.

### 1-2. Izod Impact Test

The UD sheet was cut into a size of 12.7 mm × 63.5 mm, and 20 cut UD sheets were arranged inside the metal mold so that the direction in which the fibers were aligned was identical. After that, the metal mold was preheated at a temperature of 180°C for 4 minutes, and then pressurized at a pressure of 6 MPa for 3 minutes. Thereafter, the inside of the metal mold was cooled at 15°C for 1 minute to obtain a test piece with a size of 12.7 mm × 63.5 mm × 3.0 mm. The impact strength of this test piece was measured five times in accordance with ASTM D256 with a notch, at a load of 14.7 J, and at 23°C and -30°C. The average of these measurements was used as the Izod impact strength (KJ/m²).

### 2. Fabrication of UD Sheet

### 2-1. Reinforcing Fibers

A carbon fiber bundle (manufactured by Mitsubishi Rayon Co., Ltd., Pyrofil TR50S12L, number of filaments: 24,000, strand strength: 5,000 MPa, strand modulus of elasticity: 242 GPa) was provided. This carbon fiber bundle was immersed in acetone, subjected to ultrasonic waves for 10 minutes, then taken out and washed with acetone three more times, and dried at room temperature for 8 hours to remove the attached sizing agent.

A mixture obtained by mixing 100 parts by mass of propylene-based resin A, 10 parts by mass of propylene-based resin B, and 3 parts by mass of a surfactant was fed from the hopper of a twin-screw extruder (manufactured by Ikegai Iron Works Co., Ltd., PCM-30, LID = 40) at a rate of 3,000 g/hour. Furthermore, a 20% aqueous potassium hydroxide solution was continuously fed at a rate of 90 g/hour through a feed port provided in the vent section of the extruder, and the extrusion was continuously performed at a heating temperature of 210°C. The extruded resin mixture was cooled to 110°C with a jacketed static mixer installed at the extrusion port, and further placed in warm water at 80°C to obtain an emulsion with a solid concentration of 45%.

Note that propylene-based resin A is a propylene/butene copolymer. Propylene-based resin A had a Shore D hardness of 52 and a weight average molecular weight of 350,000 as measured by GPC.

Propylene-based resin B is a modified resin obtained by mixing 96 parts by mass of a propylene/butene copolymer, 4 parts by mass of maleic anhydride, and 0.4 parts by mass of a polymerization initiator (manufactured by Nippon Oil & Fats Co., Ltd., PERHEXA 25B) and modifying it at a heating temperature of 160°C for 2 hours. Propylene-based resin B had a weight average molecular weight of 20,000 as measured by GPC, an acid value of 45 mgKOH/g, a maleic anhydride content ratio of 4% by mass, and a melting point of 140°C.

The above surfactant is potassium oleate.

The above emulsion was attached to the above carbon fibers by the roller impregnation method. After that, the fibers were dried online at 130°C for 2 minutes to remove the low-boiling-point components, and a sheet-shaped reinforcing fiber bundle was obtained. The amount of the emulsion attached in the above reinforcing fiber bundle was 0.87mass%.

### 2-2. Matrix Resin and Evaluation

20.0 parts by mass of a SEPS, 78 parts by mass of propylene-based resin (P1), and 2.0 parts by mass of propylene-based resin (P2) were molten at 180°C and kneaded to obtain matrix resin mixture 1.

98 parts by mass of propylene-based resin (P1) and 2.0 parts by mass of propylene-based resin (P2) were molten at 180°C and kneaded to obtain matrix resin mixture 2.

78 parts by mass of a SEPS, 20 parts by mass of propylene-based resin (P1), and 2 parts by mass of propylene-based resin (P2) were molten at 180°C and kneaded to obtain matrix resin mixture 3.

Note that the above SEPS was a SEPS (HYBRAR 7125F manufactured by Kuraray Co., Ltd. with an MFR of 4 g/10 min as measured in accordance with ASTM D1238 at 230°C and with a load of 2.16 kg, and a flexural modulus of elasticity of 100 MPa or less).

Also, the above propylene-based resin (P1) was a non-modified propylene resin (manufactured by LyondellBasell Industries, Moplen (R) HP500W, with an MFR of 150 g/10 min as measured in accordance with ASTM D1238 at 230°C and with a load of 2.16 kg, and a flexural modulus of elasticity of 1,600 MPa).

In addition, the above propylene-based resin (P2) was a modified polypropylene that had been graft-modified with 0.5mass% maleic anhydride (with an MFR of 9.1 g/10 min as measured in accordance with ASTM D1238 at 230°C and with a load of 2.16 kg, and a flexural modulus of elasticity of greater than 700 MPa).

### 2-3. Fabrication of UD Sheet

The above carbon fiber bundle that had been opened was aligned in parallel and brought into contact with an impregnation roll coated with the above matrix resin mixture that had been in a molten state, and the above carbon fiber bundle was impregnated with the above matrix resin mixture. The temperature of the above molten matrix resin mixture 1 was set to 260°C, and the temperature of the above impregnation roll was also set to 260°C.

A UD sheet thus obtained (hereinafter, referred to as UD sheet 1) contained 56mass% of the carbon fibers, 8.8mass% of the SEPS, and 35.2mass% of propylene-based resin (P1) and propylene-based resin (P2) (thermoplastic plastics) in total. Also, the content of the carbon fibers in the UD sheet on a volume basis (fiber volume content ratio: Vf) was 40vol%. In addition, the thickness of the UD sheet was 220 µm.

UD sheet 2 was obtained in the same manner except that matrix resin mixture 2 was used instead of matrix resin mixture 1. UD sheet 2 contained 56mass% of the carbon fibers, and 44mass% of propylene-based resin (P1) and propylene-based resin (P2) (thermoplastic plastics) in total. Also, the content of the carbon fibers in the UD sheet on a volume basis (fiber volume content ratio: Vf) was 40vol%. In addition, the thickness of the UD sheet was 160 µm.

UD sheet 3 was obtained in the same manner except that matrix resin mixture 3 was used instead of matrix resin mixture 1. UD sheet 3 contained 56mass% of the carbon fibers, 35.2mass% of the SEPS, and 8.8mass% of propylene-based resin (P1) and propylene-based resin (P2) (thermoplastic plastics) in total. Also, the content of the carbon fibers in the UD sheet on a volume basis (fiber volume content ratio: Vf) was 40vol%. In addition, the thickness of the UD sheet was 220 µm.

### 2-4. Evaluation

The flexural modulus of elasticity (at 23°C) and Izod impact strength (at 23°C) of UD sheet 1 to UD sheet 3 were measured. The results are shown in Table 1. Note that, in Table 1, the numerical values in the formulation mean, for each resin component, the proportion (unit: mass%) of each resin component with respect to the total of the mass of the SEPS, the mass of propylene -based resin (P1), and the mass of propylene-based resin (P2), and for the reinforcing fibers, the proportion (unit: vol%) of the volume of the carbon fibers with respect to the entire volume of the UD sheet.

**[Table 1]**

| UD sheet No. | | | 1 | 2 | 3 |
|---|---|---|---|---|---|
| Formulation | Resin component (mass%) | Propylene-based resin (P1) (mass%) | 78 | 98 | 20 |
| | | Propylene-based resin (P2) (mass%) | 2 | 2 | 2 |
| | | SEPS (mass%) | 20 | 0 | 78 |
| | Reinforcing fibers (vol%) | Fiber volume content ratio (Vf) | 40 | 40 | 40 |
| Physical properties | Flexural modulus of elasticity (Gpa) | | 72 | 79 | 60 |
| | Izod impact strength | | 1996.9 | 1544.7 | 2100.0 |

As is evident from Table 1, when the thermoplastic plastics were used as the matrix resin, the flexural modulus of elasticity was high, but the impact resistance was not enhanced much. When the matrix resin contained a large amount of the SEPS, the impact resistance was enhanced, but the flexural modulus of elasticity was decreased. In contrast, when the thermoplastic plastics and the SEPS were used as the matrix resin in a certain proportion, the flexural modulus of elasticity was hardly decreased even though the impact resistance-improving effect due to the SEPS was confirmed. Note that UD sheet 1 had a sea-island structure.

### 3. Fabrication and Evaluation of Resin Molded Body

### 3-1. Fabrication of Resin Molded Body

### 3-1-1. Fabrication of Resin Molded Body 1 to Resin Molded Body 3

A metal mold that has a flat cavity of 200 mm long and 180 mm wide, with a single film gate on the top side and a product wall thickness of 3 mm was provided. One sheet of UD sheet 1 was placed on the entire surface of each of the upper mold and the lower mold of this metal mold, so that the fiber direction coincides with the longitudinal direction of the metal mold.

After that, the metal mold was closed, and a thermoplastic resin composition was injected through the film gate by an injection molding machine (MD350S-III manufactured by Ube Machinery Co., Ltd.) under the conditions with a resin temperature of 230°C and a metal mold temperature of 40°C to carry out insert molding, resulting in resin molded body 1 in which the upper layer was UD sheet 1, the intermediate layer was a polypropylene molded body, and the bottom layer was UD sheet 1. Note that the injection time was 3 seconds, and the resin composition was pressurized and cooled in the metal mold for 30 seconds.

Note that the above thermoplastic resin composition injected was a polypropylene-polyethylene block copolymer (manufactured by Prime Polymer Co., Ltd., J707G).

Resin molded body 2 without upper layer and lower layer was obtained in the same manner as in the fabrication of resin molded body 1 except that the UD sheets was not placed inside the metal mold before injection.

Resin molded body 3 in which the upper layer was UD sheet 2, the intermediate layer was a polypropylene molded body, and the bottom layer was UD sheet 2 was obtained in the same manner as in the fabrication of resin molded body 1 except that UD sheet 2 was used instead of UD sheet 1.

### 3-1-2. Fabrication of Resin Molded Body 4 to Resin Molded Body 6

Resin molded body 4 to resin molded body 6 were obtained in the same manner as resin molded body 1 to resin molded body 3, respectively, except that a polypropylene reinforced with 30mass% of short glass fibers (average fiber length: 0.05 mm or more and 10 mm or less) (manufactured by Prime Polymer Co., Ltd., Prime Polypro R-350G) was used as the thermoplastic resin composition to be injected.

### 3-1-3. Fabrication of Resin Molded Body 7 to Resin Molded Body 9

Resin molded body 7 to resin molded body 9 were obtained in the same manner as resin molded body 1 to resin molded body 3, respectively, except that a mixture of 79mass% of the above polypropylene-polyethylene block copolymer and 21mass% of talc (manufactured by Matsumura Sangyo Co., Ltd., Hifiller #5000PJ) was used as the thermoplastic resin composition to be injected.

### 3-2. Evaluation

The flexural modulus of elasticity (at 23°C, 50°C, and 80°C) and Izod impact strength (at -30°C) of resin molded body 1 to resin molded body 9 were measured. The results are shown in Table 2 to Table 4.

**[Table 2]**

| Resin molded body No. | | | 1 | 2 | 3 |
|---|---|---|---|---|---|
| Layer configuration | Upper layer | | UD SHEET 1 | None | UD SHEET 2 |
| | Intermediate layer | | PP | PP | PP |
| | Lower layer | | UD SHEET 1 | None | UD SHEET 2 |
| Physical properties | Flexural modulus of elasticity | 23°C | 21.4 | 1.3 | 18.5 |
| | | 50°C | 16.3 | 0.6 | 14.9 |
| | | 80°C | 12.4 | 0.4 | 12.0 |
| | Izod impact test | -30°C | 38 | 3 | 13 |

**[Table 3]**

| Resin molded body No. | | | 4 | 5 | 6 |
|---|---|---|---|---|---|
| Layer configuration | Upper layer | | UD SHEET 1 | None | UD SHEET 2 |
| | Intermediate layer | | PP+GF | PP+GF | PP+GF |
| | Lower layer | | UD SHEET 1 | None | UD SHEET 2 |
| Physical properties | Flexural modulus of elasticity | 23°C | 25.4 | 5.9 | 22.9 |
| | | 50°C | 20.5 | 4.3 | 19.0 |
| | | 80°C | 16.9 | 3.4 | 16.1 |
| | Izod impact test | -30°C | 40 | 10 | 18 |

**[Table 4]**

| Resin molded body No. | | | 7 | 8 | 9 |
|---|---|---|---|---|---|
| Layer configuration | Upper layer | | UD SHEET 1 | None | UD SHEET 2 |
| | Intermediate layer | | PP + TALC | PP + TALC | PP + TALC |
| | Lower layer | | UD SHEET 1 | None | UD SHEET 2 |
| Physical properties | Flexural modulus of elasticity | 23°C | 19.1 | 2.3 | 17.6 |
| | | 50°C | 14.8 | 1.1 | 13.7 |
| | | 80°C | 11.1 | 0.6 | 10.4 |
| | Izod impact test | -30°C | 54 | 3 | 47 |

As is evident from Table 2 to Table 4, when the UD sheet containing a certain amount of the SEPS as the matrix resin was fused to the molded body of the thermoplastic resin, the impact resistance-improving effect due to the SEPS was confirmed to be remarkable, especially at a low temperature. On the other hand, the decrease in flexural modulus of elasticity due to the addition of the SEPS compared to the case where the UD sheet without the SEPS was fused was not confirmed, but rather the flexural modulus of elasticity was confirmed to be improved.

The present application claims priority based on Japanese Patent Application No. 2020-063416 filed on March 31, 2020, and the claims and specification of which are incorporated herein by reference.

### Industrial Applicability

The thin film-shaped fiber-reinforced resin (UD sheet) of the present invention can provide a resin molded body with both high impact resistance and high flexural strength by being fused to a base material molded body. Therefore, the above UD sheet and resin molded body can be suitably used as a variety of reinforcing materials.

## Claims

1. A thin film-shaped fiber-reinforced resin comprising:
a plurality of reinforcing fibers that are arranged in a single direction alignment; and
a matrix resin with which the reinforcing fibers are impregnated, wherein
the matrix resin contains a polypropylene-based resin and a styrene-based elastomer, and
a content of the styrene-based elastomer with respect to the entire mass of the matrix resin is 10mass% or more and 40mass% or less.

2. The thin film-shaped fiber-reinforced resin according to claim 1, wherein the styrene-based elastomer is at least one copolymer selected from the group consisting of a polystyrene - polyethylene/butylene - polystyrene block copolymer and a polystyrene - polyethylene/propylene - polystyrene block copolymer.

3. The thin film-shaped fiber-reinforced resin according to claim 1 or 2, wherein a content of the reinforcing fibers with respect to the entire volume of the fiber-reinforced resin is 20vol% or more and 60vol% or less.

4. The thin film-shaped fiber-reinforced resin according to any one of claims 1 to 3, wherein, in the matrix resin, a content ratio of a thermoplastic resin having a glass transition temperature of 100°C or higher is 5mass% or less.

5. The thin film-shaped fiber-reinforced resin according to any one of claims 1 to 4, wherein the matrix resin has a sea-island structure.

6. The thin film-shaped fiber-reinforced resin according to any one of claims 1 to 5, wherein the matrix resin contains substantially only the polypropylene-based resin and the styrene-based elastomer.

7. The thin film-shaped fiber-reinforced resin according to any one of claims 1 to 6, comprising substantially only the reinforcing fibers, the polypropylene-based resin, and the styrene-based elastomer.

8. A resin molded body comprising:
the thin film-shaped fiber-reinforced resin according to any one of claims 1 to 7; and
a molded body of a thermoplastic resin composition.

9. The resin molded body according to claim 8, wherein the thermoplastic resin composition contains a polyolefin.

10. The resin molded body according to claim 8 or 9, wherein the thermoplastic resin composition contains a filler.

11. The resin molded body according to claim 10, wherein the filler is at least one filler selected from the group consisting of talc, glass fiber, and carbon fiber.

12. The resin molded body according to claim 10 or 11, wherein the thermoplastic resin composition contains 5mass% or more and 40mass% or less of the filler with respect to the entire mass of the thermoplastic resin composition.

13. The resin molded body according to any one of claims 8 to 12, wherein the thin film-shaped fiber-reinforced resin is fused to a surface of the molded body of the thermoplastic resin composition.

14. The resin molded body according to any one of claims 8 to 13, being a layered body in which the thin film-shaped fiber-reinforced resin, the molded body of the thermoplastic resin composition, and the thin film-shaped fiber-reinforced resin are layered in an order presented.

15. A method for producing a resin molded body, the method comprising:
disposing the thin film-shaped fiber-reinforced resin according to any one of claims 1 to 7 inside a metal mold; and
introducing a molten thermoplastic resin composition inside the metal mold in which the thin film-shaped fiber-reinforced resin has been disposed.

16. A method for producing a resin molded body, the method comprising:
providing a molded body of a thermoplastic resin composition; and
fusing the thin film-shaped fiber-reinforced resin according to any one of claims 1 to 7 to a surface of the molded body of the thermoplastic resin composition.
